(19) Europäisches Patentamt
European Patent Office
Office européen des brevets

(11) **EP 1 657 810 B1**

(12) **EUROPÄISCHE PATENTSCHRIFT**

(45) Veröffentlichungstag und Bekanntmachung des Hinweises auf die Patenterteilung:
**22.12.2010 Patentblatt 2010/51**

(51) Int Cl.:
*H02P 6/06* (2006.01)  *H02P 6/14* (2006.01)
*H02P 6/18* (2006.01)  *H02P 6/00* (2006.01)

(21) Anmeldenummer: **05023823.7**

(22) Anmeldetag: **02.11.2005**

(54) **Verfahren zur automatischen Einstellung des Kommutierungswinkels bei bürstenlosen Gleichstrommotoren**

Method for the automatic adjustment of the commutation angle of brushless DC motors

Méthode de l'ajustement automatique de l'angle de commutation des moteurs à courant continu sans balai

(84) Benannte Vertragsstaaten:
**DE FI FR GB IT**

(30) Priorität: **11.11.2004 DE 102004054504**

(43) Veröffentlichungstag der Anmeldung:
**17.05.2006 Patentblatt 2006/20**

(73) Patentinhaber: **MINEBEA Co., Ltd.**
**Kitasaku-gun, Nagano-ken (JP)**

(72) Erfinder:
• **Finsinger, Michael**
**86156 Augsburg (DE)**

• **Berbatov, Nikolay**
**78056 Villingen-Schwenningen (DE)**

(74) Vertreter: **Riebling, Peter**
**Patentanwalt,**
**Postfach 31 60**
**88113 Lindau/B. (DE)**

(56) Entgegenhaltungen:
**US-A1- 2004 036 435    US-A1- 2004 056 617**
**US-B1- 6 326 752**

## Beschreibung

Die Erfindung betrifft ein Verfahren zur automatischen Einstellung des Kommutierungswinkels bei bürstenlosen Gleichstrommotoren nach dem Oberbegriff des Patentanspruchs 1.

Bürstenlose Gleichstrommotoren (BLDC-Motoren: BrushLess DC Motoren) werden für verschiedenste Anwendungen, wie z.B. in Lüftern, Elektrowerkzeugen oder bei Automotive-Anwendungen, verwendet. Dabei wird der Motor direkt mit einer Gleichspannungsquelle verbunden, wobei eine Motorelektronik bzw. Motorsteuerung zur Ansteuerung des Motors verwendet wird. In modernen BLDC Motoren wird als Herz der Steuerelektronik ein Mikrocontroller eingesetzt, der eine größtmögliche Flexibilität bei jeder Anwendung erlaubt. Durch die Verwendung eines Mikrocontrollers kann der Kommutierungswinkel relativ einfach angepasst werden, um bei jeder Anwendung den optimalen Wirkungsgrad des Motors zu erreichen.

Der Kommutierungswinkel eines Motors ist der Winkel zwischen der Stromkommutierung in den Windungen des Motors und der magnetisch neutralen Phase des Stators. Ist der Kommutierungswinkel zu groß, hat der Motor eine Bremsphase vor der Kommutierung. Ein zu geringer Kommutierungswinkel führt zu einem geringen Stromanstieg (dI/dt) in der Motorwicklung aufgrund des geringeren Reluktanzmoments (Back EMF). Der optimale Kommutierungswinkel hängt auch von der Drehzahl (Rotationsgeschwindigkeit) des Motors ab. Je größer die Rotationsgeschwindigkeit ist, desto größer kann der Kommutierungswinkel gewählt werden.

Der optimale Stromverlauf in der Motorwicklung zum Erreichen des besten Motorwirkungsgrads hängt im wesentlichen von den folgenden Parametern ab:

| | |
|---|---|
| Kommutierungswinkel | $\alpha$ |
| Betriebsspannung | $U_{in}$ |
| Rotationsgeschwindigkeit | $\omega$ |
| Motorlast und Auslegung | $L, R_s, n$ |
| Kapazität d. Speicherkondensators | $C$ |

Die Betriebsspannung $U_{in}$, die Kapazität des Speicherkondensators C, die Rotationsgeschwindigkeit $\omega$ und die Motorlast sind vorgegebene Parameter oder können während des Betriebs nicht geändert werden, um einen optimalen Stromverlauf in den Motorwicklungen zu erreichen.

Der Kommutierungswinkel kann per Firmware geändert werden und hat einen großen Einfluss auf den Stromverlauf in der Motorwicklung und folglich auf den Wirkungsgrad.

Die Berechnung des optimalen Kommutierungswinkel basiert auf einer komplexen Gleichung, die von verschiedenen Parametern abhängig ist, wie sich aus Gleichung (1) ergibt:

$$\alpha_{opt} = f\left(U_{in}, C, \omega, L, n_{wicklung}, L_{wicklung}, R_{wicklung}, T_{magnet}, \ldots\right) \qquad (1)$$

Es ist sehr schwer, diese Gleichung in die Praxis umzusetzen. Daher wird der Kommutierungswinkel meist auf einen festen Wert eingestellt, der einen Kompromiss zwischen den Betriebsbedingungen des Motors darstellt.

Die US 6326752 B1 offenbart ein Verfahren zur Kommutierung eines mehrphasigen bürstenlosen Elektromotors, wobei der Kommutierungswinkel in Abhängigkeit der Abweichung zwischen dem rotierenden elektromagnetischen Feld im Stator und dem rotierenden magnetischen Feld im Rotor eingestellt wird. Hierzu müssen jedoch an den Motorwindungen Spannungsmessungen durchgeführt werden, um den Verlauf des angelegten Stromes und des induzierten Stromes in der Wicklung messen zu können. Die Aufgabe der Erfindung besteht darin, ein Verfahren zur automatischen Einstellung des Kommutierungswinkels bei einem bürstenlosen Elektromotor anzugeben, um den Wirkungsgrad des Motors drehzahlabhängig zu verbessern.

Diese Aufgabe wird erfindungsgemäß durch ein Verfahren mit den Merkmalen des Anspruchs 1 gelöst. Eine entsprechende Vorrichtung zur Durchführung des Verfahrens ist im Anspruch 6 definiert.

Weitere bevorzugte Ausgestaltung und Merkmale der Erfindung ergeben sich aus den abhängigen Ansprüchen.

Das beschriebene Verfahren, das vorzugsweise in der Firmware des Mikrocontrollers der Motorsteuerung implementiert wird, regelt den Kommutierungswinkel automatisch in Abhängigkeit der aktuellen Rotationsgeschwindigkeit, um den Wirkungsgrad eines BLDC Motors im offenen Regelkreis zu erhöhen.

Das Verfahren verändert den Kommutierungswinkel $\alpha$ derart, dass bei einer gegebenen Rotationsgeschwindigkeit $\omega$ ein verbesserter Wirkungsgrad des Motors erreicht wird. Der Kommutierungswinkel kann in einem bestimmten Bereich geändert werden, wobei vorzugsweise ein unterer Grenzwert $\alpha_{min}$ und ein oberer Grenzwert $\alpha_{max}$ vorgegeben sind. Ein bestimmter Kommutierungswinkel $\alpha$, z. B. der Mittelwert zwischen $\alpha_{mim}$ und $\alpha_{max}$, wird als Anfangsgröße verwendet. Das Verfahren wird gestartet, sobald der Motor einen stationären Betriebszustand erreicht. Das ist der Fall, wenn die Motorsteuerung kein Steuersignal zur Änderung der Rotationsgeschwindigkeit erhält, und sich die Rotationsgeschwindigkeit auf einen bestimmten Wert eingestellt hat. Anhand des erfindungsgemäßen Verfahrens kann nun der Kommutierungswinkel $\alpha$ wie folgt optimiert werden.

Die aktuelle Rotationsgeschwindigkeit $\omega$ wird gemessen und mit einer Rotationsgeschwindigkeit $\omega^{\alpha}_{old}$ verglichen, die vor den letzten Änderungen des Kommutierungswinkels $\alpha$ gespeichert wurde. Bei Neustart des Motors wird $\omega^{\alpha}_{old}$ auf Null gesetzt und $\alpha$ wird auf einen Wert zwischen $\alpha_{min}$ und $\alpha_{max}$ gesetzt.

Ist die aktuelle Rotationsgeschwindigkeit $\omega$ größer als die zuvor gespeicherte Rotationsgeschwindigkeit $\omega^{\alpha}_{old}$, bedeutet das, dass sich der Motorwirkungsgrad seit der letzten Änderung des Kommutierungswinkels verbessert hat, da die übrigen Motorparameter unverändert geblieben sind.

Um möglicherweise eine weitere Verbesserung des Wirkungsgrades zu erreichen, wird der Kommutierungswinkel vergrößert, indem ein vorgegebener Wert $\Delta\alpha$ zum aktuellen Kommutierungswinkel $\alpha$ addiert wird. Ist die aktuelle Rotationsgeschwindigkeit $\omega$ jedoch kleiner als die zuvor gespeicherte Rotationsgeschwindigkeit $\omega^{\alpha}_{old}$, hat sich der Wirkungsgrad verschlechtert. Der Kommutierungswinkel wird verkleinert, indem ein vorgegebener Wert $\Delta\alpha$ vom aktuellen Kommutierungswinkel $\alpha$ subtrahiert wird.

Vor jeder Änderung des Kommutierungswinkels $\alpha$ wird die aktuelle Rotationsgeschwindigkeit als Wert $\omega^{\alpha}_{old}$ abgespeichert.

Nach einer Änderung des Kommutierungswinkels wird wiederum gewartet, bis sich ein stabiler Betriebszustand mit einer stabilen Rotationsgeschwindigkeit eingestellt hat. Dann wird die aktuelle Rotationsgeschwindigkeit erneut erfasst und das Verfahren von vorne durchgeführt.

Das Verfahren arbeitet fortwährend im Hintergrund der Motorsteuerung.

Der Vorteil des erfindungsgemäßen Verfahrens ist, dass die Motorsteuerung keine Sensoren zur Erfassung der Motorspannung und des Motorstroms benötigt, um die Leistung des Motors zu bestimmen. Bei Anwendungen mit stark veränderlicher Betriebsspannung kann eine Erfassung der Betriebsspannung vorgesehen werden. Das Verfahren wird als Firmware in der Motorsteuerung implementiert. Daher kann das Verfahren insbesondere in "low cost" Anwendungen verwendet werden sowie in Anwendungen, die nur eine geringe Größe der Motorelektronik /-sensorik erlauben.

Ein bevorzugtes Ausführungsbeispiel der Erfindung wird nun anhand der Zeichnung beschrieben.

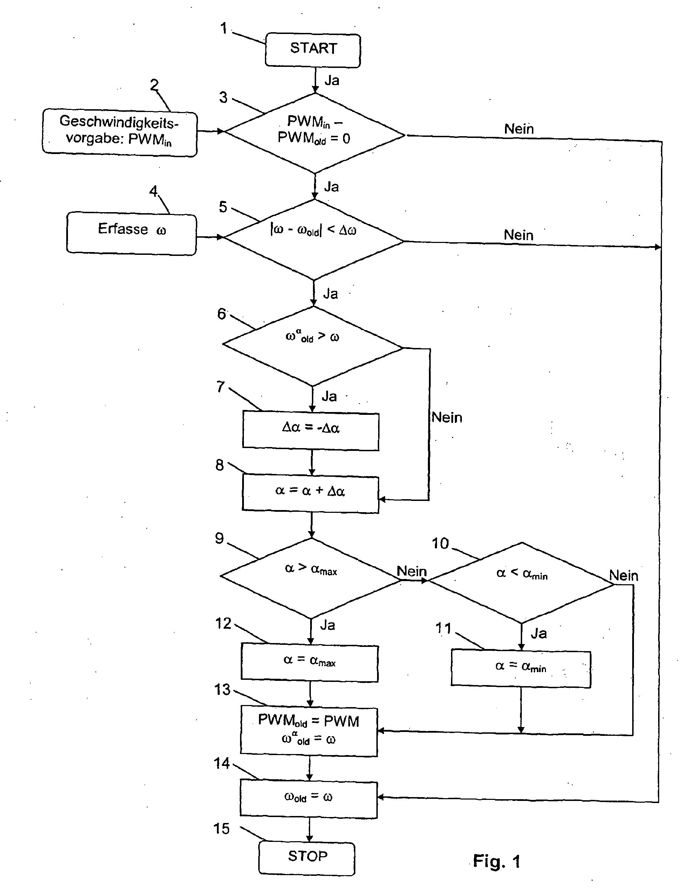

Figur 1 zeigt ein Flussdiagramm des erfindungsgemäßen Verfahrensablaufs zur Einstellung des Kommutierungswinkels.

Nach dem Start des Verfahrens gemäß Schritt 1 wird zunächst geprüft, ob sich die Geschwindigkeitsvorgabe für den Motor geändert hat (Schritt 2). In der Regel wird ein bürstenloser Gleichstrommotor mittels Pulsweitenmodulation angesteuert. Durch Vorgabe des Tastverhältnisses $PWM_{in}$ kann die Rotationsgeschwindigkeit bzw. Drehzahl des Motors bestimmt werden. In Schritt 3 wird nun geprüft, ob sich das vorgegebene Tastverhältnis geändert hat, indem vom Wert vom aktuellen Tastverhältnis $PWM_{in}$ der Wert eines zuvor abgespeicherten Tastverhältnisses $PWM_{old}$ subtrahiert wird und geprüft wird, ob die Differenz Null ergibt. Ist die Differenz nicht Null, so bedeutet das, dass die Geschwindigkeitsvorgabe geändert wurde, was zu einer Änderung der Rotationsgeschwindigkeit $\omega$ führt, so dass momentan kein stabiler Motorzustand besteht. Somit kann im Augenblick keine Einstellung des Kommutierungswinkels $\alpha$ vorgenommen werden, so dass das Verfahren mit Schritt 14 fortfährt. In Schritt 14 wird die aktuelle Rotationsgeschwindigkeit $\omega$) als Wert $\omega_{old}$ abgespeichert.

Wird in Schritt 3 festgestellt, dass sich die Geschwindigkeitsvorgabe nicht geändert hat, also die Differenz zwischen $PWM_{in}$ und $PWM_{old}$ = Null ist, dann wird im nächsten Schritt 4 die aktuelle Rotationsgeschwindigkeit $\omega$ erfasst. Im Schritt 5 wird dann der Wert der aktuellen Rotationsgeschwindigkeit $\omega$ von dem abgespeicherten Wert $\omega_{old}$ abgezogen und aus dieser Differenz der Betrag gebildet. Dieser Betrag wird mit einem Wert $\Delta\omega$ verglichen. Ist dieser Betrag nicht kleiner als ein bestimmter Wert $\Delta\omega$, so bedeutet dies, dass sich die Rotationsgeschwindigkeit $\omega$ nach wie vor relativ stark ändert und der Motor noch nicht seinen stationären Betriebszustand erreicht hat. Es wird daher mit Verfahrensschritt 14 fortgefahren und der aktuelle Wert der Rotationsgeschwindigkeit $\omega$ als Wert $\omega_{old}$ abgespeichert.

Ist der Betrag aus Schritt 5 jedoch kleiner als ein gewisser Referenzwert $\Delta\omega$, so bedeutet dies, dass sich die Rotationsgeschwindigkeit $\omega$ nicht mehr wesentlich ändert und der Motor einen stationären Betriebszustand erreicht hat. In diesem Falle kann mit der Einstellung des Kommutierungswinkels $\alpha$ begonnen werden. Hierzu wird mit Schritt 6 fortgefahren. In Schritt 6 wird die aktuelle Rotationsgeschwindigkeit $\omega$ mit einem Kommutierungswinkel bezogenen Wert $\omega^{\alpha}_{old}$ verglichen. $\omega^{\alpha}_{old}$ ist die Rotationsgeschwindigkeit, die bei der letzten Änderung des Kommutierungswinkels $\alpha$ gemessen wurde. Ist die Rotationsgeschwindigkeit $\omega$ größer als der Wert $\omega^{\alpha}$ old, so bedeutet dies eine Verbesserung des Motorwirkungsgrades seit der letzten Änderung des Kommutierungswinkels $\alpha$. In diesem Falle wird zum aktuellen Kommutierungswinkel $\alpha$ ein bestimmter Wert $\Delta\alpha$ addiert, also der aktuelle Kommutierungswinkel $\alpha$ vergrößert (Schritt 8). Ist jedoch $\omega^{\alpha}_{old}$ größer als $\omega$, so hat sich der Wirkungsgrad verschlechtert und es wird mit Schritt 7 fortgefahren und der Wert $\Delta\alpha$ auf den Wert -$\Delta\alpha$ gesetzt. Das bedeutet in Schritt 8, dass zum aktuellen Kommutierungswinkel ein negativer

Wert $\Delta\alpha$ addiert wird, so dass in diesem Falle der Kommutierungswinkel $\alpha$ verkleinert wird.

In der Motorsteuerung wird festgelegt, in welchem Bereich sich die Änderung des Kommutierungswinkels $\alpha$ bewegen kann. Hierzu wird eine untere Bereichsgrenze $\alpha_{min}$ und eine obere Bereichsgrenze $\alpha_{max}$ festgelegt. In Schritt 9 wird überprüft, ob der aktuelle Kommutierungswinkel $\alpha$ größer ist als der maximale Wert $\alpha_{max}$. Ist dies der Fall, wird in Schritt 12 der Wert des aktuellen Kommutierungswinkels $\alpha$ auf den Maximalwert $\alpha_{max}$ gesetzt. Ist dies nicht der Fall, so wird mit Schritt 10 fortgefahren. Hier wird überprüft, ob der aktuelle Kommutierungswinkel $\alpha$ kleiner ist als der Minimalwert $\alpha_{min}$. Ist dies der Fall, wird in Schritt 11 der aktuelle Kommutierungswinkel $\alpha$ auf den Wert $\alpha_{min}$ gesetzt. Ist dies nicht der Fall, so wird mit Schritt 13 fortgefahren. In diesem Schritt wird das aktuelle Tastverhältnis PWM im Wert PWM$_{old}$ abgespeichert. Gleichzeitig wird der Wert $\omega^\alpha_{old}$ auf den aktuellen Wert $\omega$ der Rotationsgeschwindigkeit gesetzt. In Schritt 14 wird der aktuelle Wert $\omega$ der Rotationsgeschwindigkeit im Wert $\omega_{old}$ abgespeichert. Das Verfahren ist nun beendet (Schritt 15). Es kann nun wieder von vorne durchgeführt werden.

**Liste der verwendeten Parameter**

| | |
|---|---|
| $\omega$ | aktuelle Rotationsgeschwindigkeit (Drehzahl) |
| $\Delta\omega$ | zulässige Abweichung der Rotationsgeschwindigkeit |
| ($\omega^\alpha_{old}$ | Rotationsgeschwindigkeit bei der letzten Änderung des Kommutierungswinkels $\alpha$ |
| $\omega_{old}$ | letzter gespeicherter Wert der Rotationsgeschwindigkeit |
| | |
| $\alpha$ | aktueller Kommutierungswinkel |
| $\Delta\alpha$ | Änderungswert des Kommutierungswinkels |
| $\alpha_{max}$ | maximal erlaubter Kommutierungswinkel |
| $\alpha_{min}$ | minimal erlaubter Kommutierungswinkel |
| | |
| PWM$_{in}$ | vorgegebenes Tastverhältnis |
| PWM$_{old}$ | vorheriges Tastverhältnis |

**Patentansprüche**

1. Verfahren zur automatischen Einstellung des Kommutierungswinkels $\alpha$ eines bürstenlosen Elektromotors, wobei die Ansteuerung des Elektromotors durch eine elektronische Motorsteuerung auf Basis eines offenen Regelkreises und unter Verwendung eines veränderlichen Kommutierungswinkels $\alpha$, erfolgt, **dadurch gekennzeichnet, dass** die folgenden Schritte wiederholt durchgeführt werden:

   Prüfen, ob der Motor einen stationären Betriebszustand erreicht hat, und falls ein stationärer Betriebszustand erreicht ist:

   - Erfassen der aktuellen Rotationsgeschwindigkeit $\omega$ des Elektromotors;
   - Vergleichen der aktuellen Rotationsgeschwindigkeit mit einer vor der letzten Änderung des Kommutierungswinkels $\alpha$ ermittelten und gespeicherten Rotationsgeschwindigkeit $\omega^\alpha_{old}$,
   - Vergrößern des Kommutierungswinels $\alpha$ um einen vorgegebenen Wert $\Delta\alpha$, falls $\omega > \omega^\alpha_{old}$; oder
   - Verkleinern des Kommutierungswinkels $\alpha$ um einen vorgegebenen Wert $\Delta\alpha$, falls $\omega < \omega^\alpha_{old}$;
   - Speichern der aktuellen Drehzahl $\omega$ als neuer Wert $\omega^\alpha_{old}$; und
   - Beenden des Verfahrens;
   und falls kein stationärer Betriebszustand erreicht ist:
   - Speichern der aktuellen Drehzahl $\omega$ als neuer Wert $\omega^\alpha_{old}$;
   - Beenden des Verfahrens.

2. Verfahren nach Anspruch 1, **dadurch gekennzeichnet, dass** der Kommutierungswinkel $\alpha$ zwischen einem unteren Grenzwert $\alpha_{min}$ und einem oberen Grenzwert $\alpha_{max}$ veränderlich ist.

3. Verfahren nach Anspruch 1 oder 2, **dadurch gekennzeichnet, dass** eine Änderung des Kommutierungswinkels nur bei einem stabilen Betriebszustand des Motors durchgeführt wird.

**4.** Verfahren nach Anspruch 1 oder 2, **dadurch gekennzeichnet, dass** der Motorwirkungsgrades ohne eine Messung der aufgenommenen Leistung, also der aktuellen Spannung und des aufgenommenen Stromes, optimiert wird.

**5.** Verfahren nach einem der vorhergehenden Ansprüche, **dadurch gekennzeichnet, dass** es bei einem Motor zum Antrieb von Lüftern oder Pumpen verwendet wird.

**6.** Vorrichtung zur Einstellung des Kommutierungswinkels bei einem bürstenlosen Elektromotor, als Teil einer elektronischen Motorsteuerung auf Basis eines offenen Regelkreises zur Ansteuerung des Elektromotors mit einem veränderlichen Kommutierungswinkel $\alpha$,
**gekennzeichnet durch**:

- Mittel zur Prüfung, ob der Motor einen stabilen und stationären Betriebszustand erreicht hat;
- Mittel zur Erfassung der aktuellen Rotationsgeschwindigkeit $\omega$ des Elektromotors;
- Mittel zum Vergleichen der aktuellen Rotationsgeschwindigkeit mit einer vor der letzten Änderung des Kommutierungswinkels $\alpha$ ermittelten und gespeicherten Rotationsgeschwindigkeit $\omega^{\alpha}_{old}$,
- Mittel zum Verändern des Kommutierungswinkels $\alpha$, wobei der Kommutierungswinkel $\alpha$ um einen vorgegebenen Wert $\Delta\alpha$ vergrößert wird, falls $\omega > \omega^{\alpha}_{old}$, oder um einen vorgegebenen Wert $\Delta a$ verkleinert wird, falls $\omega < \omega^{\alpha}_{old}$;
- Mittel zum Speichern der Rotationsgeschwindigkeit $\omega^{\alpha}_{old}$.

**7.** Vorrichtung nach Anspruch 6, **dadurch gekennzeichnet, dass** die Mittel zur Erfassung der aktuellen Rotationsgeschwindigkeit mindestens einen Hallsensor umfassen, dessen Ausgangssignale von der Motorsteuerung ausgewertet werden.

**Claims**

**1.** Method for automatically adjusting the commutation angle $\alpha$ of a brushless electric motor, the electric motor being activated by an electronic motor controller based on an open-loop control and using a variable commutation angle $\alpha$, **characterised in that** the following steps are carried out repeatedly:

checking whether the motor has reached a stationary operating state, and if a stationary operating state has been reached:

- detecting the current rotational speed w of the electric motor;
- comparing the current rotational speed with a rotational speed $\omega^{\alpha}_{old}$ determined and stored before the last change in the commutation angle $\alpha$,
- increasing the commutation angle $\alpha$ by a predetermined value $\Delta\alpha$, if $w > \omega^{\alpha}_{old}$;
or
- decreasing the commutation angle $\alpha$ by a predetermined value $\Delta\alpha$, if $w < \omega^{\alpha}_{old}$;
- storing the current rotational speed w as a new value $\omega^{\alpha}_{old}$; and
- ending the method;

and if no stationary operating state is reached:

- storing the current rotational speed w as a new value $\omega^{\alpha}_{old}$;
- ending the method.

**2.** Method according to claim 1, **characterised in that** the commutation angle $\alpha$ is variable between a lower limit value $\alpha_{min}$ and an upper limit value $\alpha_{max}$.

**3.** Method according to claim 1 or 2, **characterised in that** a change in the commutation angle is only carried out in a stable operating state of the motor.

**4.** Method according to claim 1 or 2, **characterised in that** the motor efficiency is optimised without a measurement of the input power, that is, the current voltage and the input current.

**5.** Method according to any one of the preceding claims, **characterised in that** it is used in a motor to drive fans or pumps.

6. Device for adjusting the commutation angle in a brushless electric motor, as part of an electronic motor controller based on an open-loop control to activate the electric motor using a variable commutation angle $\alpha$, **characterised by**:

- means for checking whether the motor has reached a stable and stationary operating state;
- means for detecting the current rotational speed w of the electric motor;
- means for comparing the current rotational speed with a rotational speed $\omega^{\alpha}_{old}$ determined and stored before the last change in the commutation angle $\alpha$,
- means for changing the commutation angle $\alpha$, wherein the commutation angle $\alpha$ is increased by a predetermined value $\Delta\alpha$, if w > $\omega^{\alpha}_{old}$, or is reduced by a predetermined value $\Delta\alpha$, if w < $\omega^{\alpha}_{old}$;
- means for storing the rotational speed $\omega^{\alpha}_{old}$.

7. Device according to claim 6, **characterised in that** the means for detecting the current rotational speed comprise at least one Hall sensor, the output signals of which are evaluated by the motor controller.

**Revendications**

1. Procédé pour régler automatiquement l'angle de commutation $\alpha$ d'un moteur électrique sans balai, la commande du moteur électrique se faisant grâce à une commande de moteur électronique sur la base d'une boucle de régulation ouverte et à l'aide d'un angle de commutation $\alpha$ variable, **caractérisé en ce que** les étapes suivantes sont exécutées à plusieurs reprises :

contrôle pour voir si le moteur a atteint un régime stationnaire et, au cas où un régime stationnaire est atteint :

- relevé de la vitesse de rotation $\omega$ actuelle du moteur électrique ;
- comparaison de la vitesse de rotation actuelle avec une vitesse de rotation $\omega^{\alpha}_{old}$ déterminée et mise en mémoire lors de la dernière modification de l'angle de commutation $\alpha$,
- augmentation de l'angle de commutation $\alpha$ suivant une valeur $\Delta\alpha$ prédéfinie, au cas où $\omega > \omega^{\alpha}_{old}$ ; ou
- réduction de l'angle de commutation $\alpha$ suivant une valeur $\Delta\alpha$ prédéfinie, au cas où $\omega < \omega^{\alpha}_{old}$ ;
- mise en mémoire du nombre de tours $\omega$ actuel comme nouvelle valeur $\omega^{\alpha}_{old}$ ; et
- fin du procédé ;

au cas où aucun régime stationnaire n'est atteint :
- mise en mémoire du nombre de tours $\omega$ actuel, comme nouvelle valeur $\omega^{\alpha}_{old}$ ;
- fin du procédé.

2. Procédé selon la revendication 1, **caractérisé en ce que** l'angle de commutation $\alpha$ est variable entre une valeur limite inférieure $\alpha_{min}$ et une valeur limite supérieure $\alpha_{max}$.

3. Procédé selon la revendication 1 ou 2, **caractérisé en ce qu'**une modification de l'angle de commutation n'est effectuée que dans le cas d'un régime stable du moteur.

4. Procédé selon la revendication 1 ou 2, **caractérisé en ce que** le rendement du moteur est optimisé sans mesure de la puissance absorbée, c'est-à-dire de la tension actuelle et du courant absorbé.

5. Procédé selon l'une des revendications précédentes, **caractérisé en ce qu'**il est utilisé dans le cas d'un moteur pour entraîner des soufflantes ou des pompes.

6. Dispositif pour régler l'angle de commutation sur un moteur électrique sans balai, comme élément d'une commande de moteur électronique sur la base d'une boucle de régulation ouverte pour commander le moteur électrique avec un angle de commutation $\alpha$ variable, **caractérisé par** :

- des moyens pour vérifier si le moteur a atteint un régime stable et stationnaire ;
- des moyens pour relever la vitesse de rotation $\omega$ actuelle du moteur électrique ;
- des moyens pour comparer la vitesse de rotation actuelle avec une vitesse de rotation $\omega^{\alpha}_{old}$ déterminée et

mise en mémoire lors de la dernière modification de l'angle de commutation $\alpha$,
- des moyens pour modifier l'angle de commutation $\alpha$, l'angle de commutation $\alpha$ étant augmenté d'une valeur $\Delta\alpha$ prédéfinie, au cas où $\omega > \omega^{\alpha}_{old}$, ou réduit d'une valeur $\Delta\alpha$ prédéfinie, au cas où $\omega < \omega^{\alpha}_{old}$;
- des moyens pour mettre en mémoire la vitesse de rotation $\omega^{\alpha}_{old}$.

**7.** Dispositif selon la revendication 6, **caractérisé en ce que** les moyens pour relever la vitesse de rotation actuelle comprennent au moins un capteur à effet Hall dont les signaux de sortie sont analysés par la commande de moteur.

1 START
Ja

2 Geschwindigkeits-vorgabe: PWM$_{in}$

3 PWM$_{in}$ – PWM$_{old}$ = 0
Nein
Ja

4 Erfasse $\omega$

5 $|\omega - \omega_{old}| < \Delta\omega$
Nein
Ja

6 $\omega^{\alpha}_{old} > \omega$
Nein
Ja

7 $\Delta\alpha = -\Delta\alpha$

8 $\alpha = \alpha + \Delta\alpha$

9 $\alpha > \alpha_{max}$
Nein

10 $\alpha < \alpha_{min}$
Nein

Ja

11 $\alpha = \alpha_{min}$

Ja

12 $\alpha = \alpha_{max}$

13 PWM$_{old}$ = PWM
$\omega^{\alpha}_{old} = \omega$

14 $\omega_{old} = \omega$

15 STOP

Fig. 1

**EP 1 657 810 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6326752 B1